# EUROPEAN PATENT APPLICATION

(11) **EP 2 515 267 A1**
(43) Date of publication of application: **24.10.2012**
(21) Application number: 11800952.1
(22) Date of filing: 30.06.2011
(51) Int. Cl.: G06Q 30/00

(54) **PRODUCT PURCHASE SUPPORT DEVICE, PRODUCT PURCHASE SUPPORT METHOD, PRODUCT PURCHASE SUPPORT PROGRAM, AND COMPUTER READABLE RECORDING MEDIUM HAVING PRODUCT PURCHASE SUPPORT PROGRAM RECORDED THEREON**

(30) Priority: 30.06.2010 JP 2010149967
(71) Applicant: Rakuten, Inc., Tokyo 140-0002 (JP)
(72) Inventor: HASHIYAMA Makito, Tokyo 140-0002 (JP)
(74) Representative: HOFFMANN EITLE
(86) International application number: PCT/JP2011/065039
(87) International publication number: WO 2012/002490

(57) **Abstract**

There is provided a product purchase support apparatus capable of reducing a possibility that a user misses a benefit which he/she can enjoy if he/she purchases further products.

A benefit given when a product is purchased and a benefit application condition necessary for applying the benefit are held as benefit information per benefit, and when the benefit application condition is not met, a different product meeting the benefit application condition, which is met by purchasing the different product from and in addition to user-desired products, is extracted and presentation information for presenting the different product and the benefit application condition to the user is provided to the terminal.

## Description

### TECHNICAL FIELD

The present invention relates to a technical field of electronic commercial transactions by use of a network such as Internet.

Conventionally, there has been widely used Internet shopping by which products can be purchased via a network such as Internet. A user who wants to purchase some products via Internet shopping accesses a shopping site from a user terminal, selects a desired product from among products sold on the shopping site and completes an order processing, thereby purchasing the selected product (see Patent Literature 1, for example).

A campaign is typically practiced on the users who have purchased a specific product or specific service (see Patent Literature 2, for example). An exemplary campaign is to give a benefit of free shipping of the products over predetermined purchase amount. Such a benefit has an advantage of promoting users' willingness to purchase.

### CITATION LIST

### PATENT LITERATURE

PTL 1: Japanese Patent Application Laid-Open No.2002-236694
PTL 2: Japanese Patent Application Laid-Open No.2009-163550

### SUMMARY OF THE INVENTION

### PROBLEM TO BE SOLVED BY THE INVENTION

However, in the conventional Internet shopping, when a user has purchased a product without knowing a presence of benefit, he/she may regret that he/she could not enjoy the benefit on the product purchase. For example, after having completed the purchase processing of a product, the user may regret not being able to enjoy the benefit of another product.

The present invention has been made in terms of the above problem and it is an obj ect thereof to provide a product purchase support apparatus and the like capable of preventing a user from missing a benefit which he/she can enjoy when having purchased another product.

### MEANS FOR SOLVING THE PROBLEM

In order to solve the above problem, an invention described in claim 1 is a product purchase support apparatus for supporting a user to purchase a product from a store by use of a terminal device, the product purchase support apparatus comprising: a benefit information holding means that holds a benefit which is given when the product is purchased and a benefit application condition necessary for applying the benefit as benefit information per benefit; a different product extraction means that extracts a different product meeting the benefit application condition when the user purchases the different product from and in addition to desired products in case that the benefit application condition is not met; and a provision means that provides, to the terminal, presentation information for presenting the different product and the benefit application condition to the user.

An invention described in claim 2 is the product purchase support apparatus according to claim 1, further comprising: a cancelled product extraction means that extracts a cancelled product which meets the benefit application condition even when the user cancels at least some products from desired products, wherein the presentation information is directed for further presenting the cancelled product.

An invention described in claim 3 is the product purchase support apparatus according to claim 2, wherein the different product extraction means extracts a fungible product with the extracted cancelled product as the different product.

An invention described in claim 4 is the product purchase support apparatus according to claim 3, wherein the fungible product is in the same genre as the extracted cancelled product.

An invention described in claim 5 is the product purchase support apparatus according to claim 3 or 4, wherein the user-purchasable product is sold at any store in multiple stores, and the fungible product is sold at the same store as the store selling the extracted cancelled product.

An invention described in claim 6 is the product purchase support apparatus according to any one of claims 1 to 5, wherein the benefit information holding means further holds a process condition which is met in a process until the benefit application condition is met per benefit, and the different product extraction means extracts the different product in case that the benefit application condition is not met but the process condition is met.

An invention described in claim 7 is the product purchase support apparatus according to any one of claims 3 to 6, further comprising: a fungible product storage means that stores the user-purchasable product and a fungible product with the product in a corresponded manner, wherein the different product extraction means extracts the different product with reference to the fungible product storage means.

An invention described in claim 8 is the product purchase support apparatus according to claim 3, further comprising: a selection history holding means that holds a history that a user includes a product in a group of desired products, and a history that the user cancelled a product from the group of desired products; and a replaceable relationship determination means that when the selection history holding means holds a history that one product included in the same genre or related genres as the other product out of the group of desired products is cancelled with the other product left, determines that the products included in the group of desired products are in a replaceable relationship, wherein the replaceable product is a product determined as in the replaceable relationship with the extracted cancelled product.

An invention described in claim 9 is the product purchase support apparatus according to claim 3, further comprising: a favorite information holding means that holds a product which the user includes in a group of favorite products, and a time/date when the product is included in the group of favorite products in a corresponded manner; and a replaceable relationship determination means that determines that multiple products included in the same genre or related genres, which are included in the group of favorite products in a predetermined period, are in a mutually replaceable relationship in the favorite information holding means, wherein the replaceable product is a product determined as in the replaceable relationship with the extracted cancelled product.

An invention described in claim 10 is the product purchase support apparatus according to claim 3, further comprising: a purchase history holding means that holds a product purchase history per user; and a replaceable relationship determination means that extracts a user who has purchased one product more than predetermined times, and when the extracted user has not purchased the one product for a predetermined period and has purchased the other product in the same genre as the one product in the predetermined period, determines that the one product and the other product are in a replaceable relationship, wherein the replaceable product is a product determined as in the replaceable relationship with the extracted cancelled product.

An invention described in claim 11 is the product purchase support apparatus according to claim 10, wherein only when the extracted user purchased the other product and then did not purchased the one product, the replaceable relationship determination means determines that the one product and the other product are in a replaceable relationship.

An invention described in claim 12 is the product purchase support apparatus according to any one of claims 1 to 11, wherein the provision means further provides, to the terminal, display data for displaying a product designation screen on which the user can designate the different product as a desired product.

An invention described in claim 13 is a product purchase support method performed by a computer included in a product purchase support apparatus for supporting a user to purchase a product by use of a terminal, the method comprising: a benefit information holding step of holding a benefit which is given when the product is purchased and a benefit application condition necessary for applying the benefit as benefit information per benefit; a different product extraction step of extracting a different product meeting the benefit application condition when the user purchases the different product from and in addition to desired products in case that the benefit application condition is not met; and a provision step of providing, to the terminal, presentation information for presenting the different product and the benefit application condition to the user.

An invention described in claim 14 is a product purchase support program for causing a computer included in a product purchase support apparatus for supporting a user to purchase a product by use of a terminal to function as: a benefit information holding means that holds a benefit which is given when the product is purchased and a benefit application condition necessary for applying the benefit as benefit information per benefit; a different product extraction means that extracts a different product meeting the benefit application condition when the user purchases the different product from and in addition to desired products in case that the benefit application condition is not met; and a provision means that provides, to the terminal, presentation information for presenting the different product and the benefit application condition to the user.

An invention described in claim 15 is a computer-readable recording medium recording a product purchase support program therein, the program for causing a computer included in a product purchase support apparatus for supporting a user to purchase a product by use of a terminal to function as: a benefit information holding means that holds a benefit which is given when the product is purchased and a benefit application condition necessary for applying the benefit as benefit information per benefit; a different product extraction means that extracts a different product meeting the benefit application condition when the user purchases the different product from and in addition to desired products in case that the benefit application condition is not met; and a provision means that provides, to the terminal, presentation information for presenting the different product and the benefit application condition to the user.

### EFFECT OF THE INVENTION

According to the present invention, a user purchases a desired product and a different product from the product thereby to meet an application condition of the benefit, which is presented to the user. Thus, the benefit application condition applied to the user who has purchased the product can be grasped by the user, which can prevent the user from missing the benefit and can enhance the user's satisfaction with the benefit applied. It is assumed that the user would purchase the product for meeting the benefit application condition, which can enhance the sales of the store selling the product.

### BRIEF DESCRIPTION OF THE DRAWINGS

Fig. 1 is a diagram showing an exemplary schematic structure of a shopping system.
Fig. 2 is a block diagram showing an exemplary schematic structure of a shopping server.
Fig. 3 is a diagram showing exemplary contents registered in various databases.
Fig. 4 is a diagram showing a specific example of information registered in a benefit DB.
Fig. 5 is a diagram showing exemplary determinations of a presentation condition and an application condition for the benefit with the benefit ID "CMP003".
Fig. 6 is a sequence diagram showing exemplary operations of the shopping system.
Fig. 7 is a flowchart showing exemplary operations in a condition determination processing in the shopping server.
Fig. 8(A) is a diagram showing part of exemplary information registered in a fungible product DB; Fig. 8 (B) is a diagram showing part of exemplary information registered in a store-based product DB.
Fig. 9 shows an exemplary screen when an accounting page is displayed on a user terminal.
Fig. 10 shows an exemplary screen when an accounting page is displayed on the user terminal.

### MODES FOR CARRYING OUT THE INVENTION

Embodiments according to the present invention will be described below with reference to the drawings. The embodiments described later are when the present invention is applied to a shopping system.

### [1. Structure of shopping system]

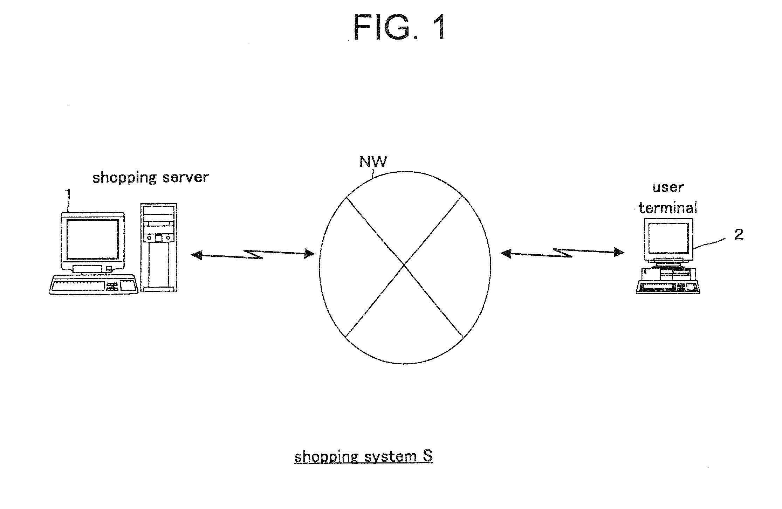

A structure of a shopping system S according to a first embodiment of the present invention will be described first with reference to Fig. 1.

As shown in Fig. 1, the shopping system S includes a shopping server 1 (exemplary "product purchase support apparatus") and a user terminal 2 (exemplary "terminal"). In the example shown in Fig. 1, one user terminal 2 is shown for convenience of description, but many user terminals 2 can actually access the shopping server 1.

The shopping server 1 and the user terminal 2 can mutually exchange data by use of a communication protocol such as TCP/IP via a network NW. The network NW is configured of Internet, a dedicated communication line (such as CATV (Community Antenna Television) line), a mobile communication network (including base stations) and a gateway, for example.

The shopping server 1 is installed for managing a shopping site to which multiple stores participate, and is directed for receiving a product order from the user terminal 2 and establishing a purchasing contract between the user of the user terminal 2 and the store.

The user terminal 2 has a Web browser function and is directed for transmitting, for example, a HTTP (Hyper Text Transfer Protocol) request to the shopping server 1, receiving a Web page as a response thereto and displaying it on a display unit. Thereby, the user of the user terminal 2 can browse the information provided from the shopping site. An exemplary user terminal 2 is a computer, a PDA (Personal Digital Assistant) or a cell phone which is used by the user.

### [2. Structure of shopping server 1]

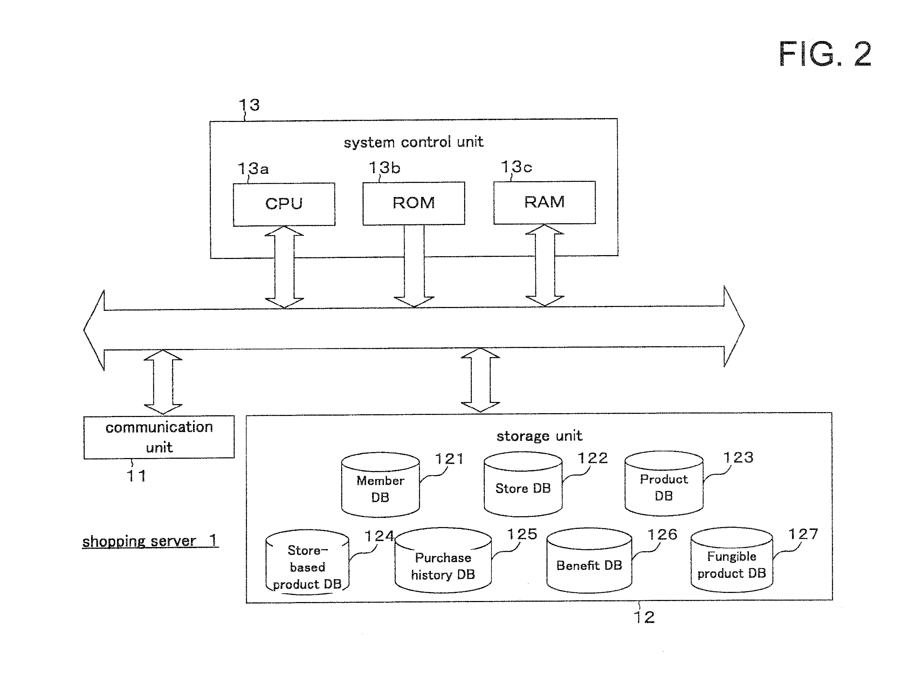

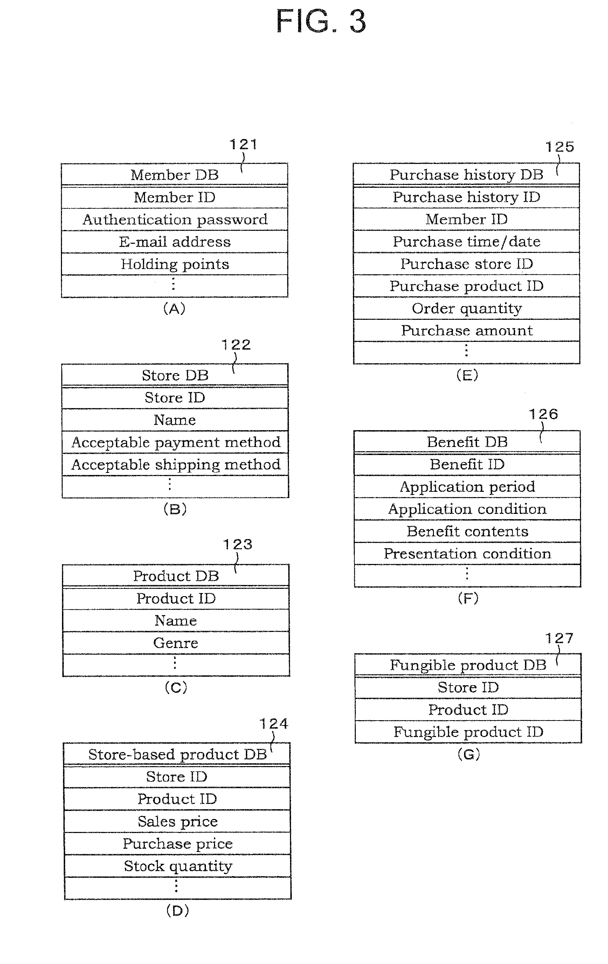

A structure of the shopping server 1 will be described below with reference to Fig. 2 and Fig. 3.

As shown in Fig. 2, the shopping server 1 mainly comprises a communication unit 11, a storage unit 12 and a system control unit 13.

The communication unit 11 is connected to the network NW to control a communication state with the user terminal 2.

The storage unit 12 is configured of a hard disc drive, for example, and stores an operating system or various software such as server software. Various software may be acquired from other server apparatus via the network NW or may be recorded in a recording medium and read via the drive device, for example.

The storage unit 12 stores therein various HTML (Hyper Text Markup Language) documents or materials (such as image data, speech data and animation data) for generating Web pages to be transmitted to the user terminal 2. The Web pages to be transmitted to the user terminal 2 include the top page of a shopping site described later, a product search page, a search result page, an individual product page, a in-store product list page, an accounting page, an order content confirmation page, and the like.

The storage unit 12 constructs therein a member database (DB) 121, a store DB 122, a product DB 123, a store-based product DB 124, a purchase history DB 125, a benefit DB 126 and a fungible product DB 127. The benefit DB 126 is an exemplary "benefit information holding means." The fungible product DB 127 is an exemplary "fungible product storage means."

The member DB 121 shown in Fig. 3 (A) registers therein member information such as a member ID, an authentication password, an e-mail address and holding points of a member (a user of the shopping site, the user purchasing products by the user terminal 2) registered in the shopping site. The holding point is given to the user who has purchased the products on the shopping site according to the purchase amount. The user can purchase a product by the holding points on the shopping site.

The store DB 122 shown in Fig. 3(B) registers therein store information such as a store ID of a store (a store selling products) registered in the shopping site, a name, an acceptable payment method and an acceptable shipping method.

The product DB 123 shown in Fig. 3 (C) registers therein product information such as a product ID of a product sold on the shopping site, a name and a genre.

The store-based product DB 124 shown in Fig. 3(D) registers therein a sales price, a purchase price and a stock quantity per store ID and product ID.

The purchase history DB 125 shown in Fig. 3 (E) registers therein purchase history information of the user's purchase of products on the shopping site. Specifically, the member ID of the user purchasing a product, the purchase time/date, the purchase store ID, the purchase product ID, the order quantity and the purchase amount are registered per purchase history ID.

The benefit DB 126 shown in Fig. 3 (F) registers benefit information such as a benefit ID, an application period, an application condition, benefit contents and a presentation condition of a benefit given to the user on the shopping site. The benefit is given when the application condition is met. The presentation condition is to be met for presenting the application condition to the user. When the presentation condition is met but the application condition is not met, there are presented, to the user, the application condition of a corresponding benefit and the product to be purchased instead of the product registered in the shopping cart described later for meeting the application condition.

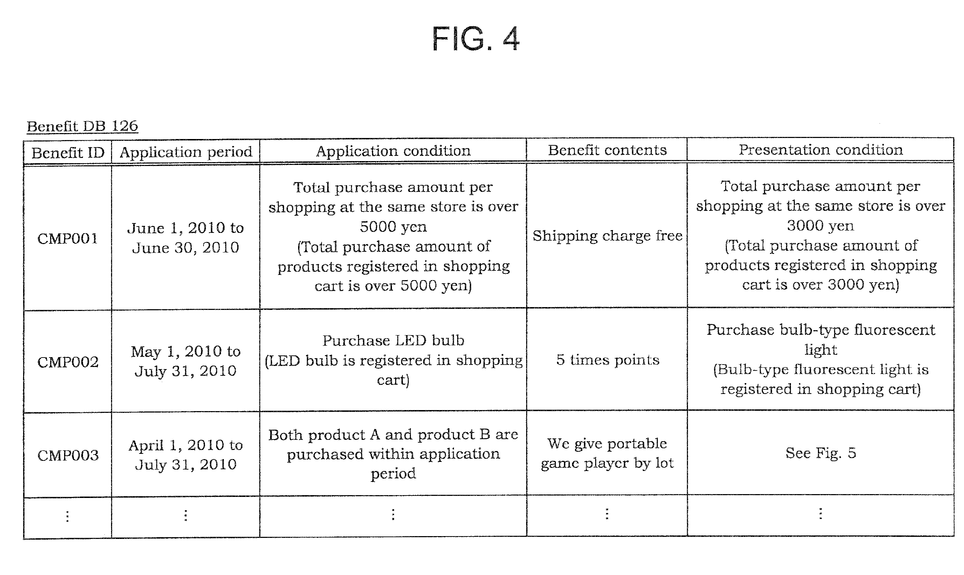

A specific example of benefit information registered in the benefit DB 126 will be described with reference to Fig. 4. The benefit identified with the benefit ID "CMP001" in Fig. 4 is that if the application condition that the total purchase amount is over 5000 yen per shopping (one payment) at the same store is met within the application period of June 1, 2010 to June 30, 2010, the shipping charge of the products purchased on the shopping is free. For the benefit identified with the benefit ID "CMP001", when the presentation condition that the total purchase amount per shopping at the same store is over 3000 yen is met but the application condition that the total purchase amount per shopping at the same store is over 5000 yen is not met, the application condition for notifying the user of the benefit, the benefit contents, and the product to be purchased instead of the product registered in the shopping cart are presented to the user.

When the presentation condition and the application condition for the benefit are determined according to the present embodiment, the product registered in the shopping cart is determined as a purchased product. For example, for the benefit identified with the benefit ID "CMP001", when the total purchase amount of the products registered in the shopping cart is over 3000 yen, it is determined that the presentation condition is met. On the other hand, when the total purchase amount of the products registered in the shopping cart is over 5000 yen, it is determined that the application condition is met. The shopping cart according to the present embodiment is a shopping cart for electronic commercial transactions and the products to be purchased, which are designated by the user, are registered therein. According to the present embodiment, the products purchased by the same user at the same store are registered in the same shopping cart, but the products purchased by the same user at multiple stores may be registered in the same shopping cart.

The benefit identified with the benefit ID "CMP002" is that when the application condition that a LED (Light Emitting Diode) bulb is to be purchased within the application period of May 1, 2010 to July 31, 2010 is met, the point to be given for the purchase of the LED bulb is quintupled. For the benefit identified with the benefit ID "CMP002", when the presentation condition that a bulb-type fluorescent light is to be purchased is met but the application condition that a LED bulb is to be purchased is not met, the application condition for notifying the user of the benefit, the benefit contents, the product (LED bulb) to be purchased instead of the product (bulb-type fluorescent light) registered in the shopping cart are presented to the user.

For the presentation condition for the benefit identified with the benefit ID "CMP002", when a bulb-type fluorescent light is registered in the shopping cart, it is determined that the presentation condition is met. For the application condition for the benefit identified with the benefit ID "CMP002", when a LED bulb is registered in the shopping cart, it is determined that the application condition is met.

The benefit identified with the benefit ID "CMP003" is that when the application condition that both a product A and a product B are to be purchased within the application period (April 1, 2010 to July 31, 2010) is met, a portable game player is given by lot. When the presentation condition and the application condition for the benefit identified with the benefit ID "CMP003" are determined, a determination is made based on the products registered in the shopping cart and the purchase history information within the application period registered in the purchase history DB 125.

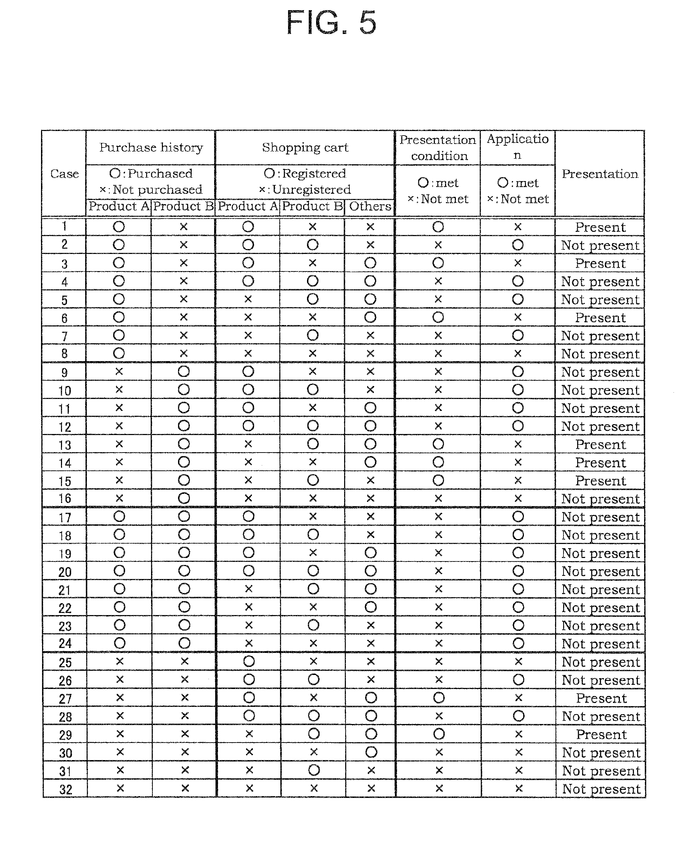

The application condition and the presentation condition for the benefit identified with the benefit ID "CMP003" will be described herein with reference to Fig. 5. Fig. 5 is a diagram showing how the presentation condition and the application condition are determined based on the user's purchase history and the products registered in the shopping cart. For example, in Case 1, when the user has already purchased the product A within the application period but has not purchased the product B yet, if only the product A is registered in the shopping cart, it is determined that the presentation condition is met while the application condition is not met. That is, in Case 1, the application condition for notifying the user of the benefit, the benefit contents, and the product (the product B) to be purchased instead of the product (product A) registered in the shopping cart are presented to the user. In Cases 2, 4, 5 and 7, since both the product A and the product B are purchased within the application period, it is determined that the application condition is met, and the information thereof is not presented to the user. In Case 8, since no product is registered in the shopping cart (that is, a replacement target product is not present), it is determined that neither the present condition nor the application condition is met. In Cases 3 and 6, it is determined that the presentation condition is met but the application condition is not met, and thus the application condition, the benefit contents, the product (the product B) to be purchased instead of the product (the product A or other product) registered in the shopping cart are presented to the user. In Cases 9 to 32, how the presentation condition and the application condition are determined is as shown in Fig. 5 and thus an individual specific explanation thereof will be omitted.

The fungible product DB 127 shown in Fig. 3 (G) registers therein a product ID, and a product ID ("fungible product ID") for identifying a fungible product with the product identified with the product ID per store ID in a corresponded manner. The products identified with the product ID and the fungible product ID, which are registered in a mutually-corresponded manner, are sold at the same store identified with the store ID, respectively. Thus, for example, when a fungible product sold at the store X is specified for a product Y sold at the store X, the product can be specified by searching the fungible product DB 127 based on the store ID of the store X and the product ID of the searched product Y (the product identified with the fungible product ID is to be specified). Both the fungible products in the fungible product DB 127 belong to the same genre.

The storage unit 12 constructs therein a product search DB (not shown), and the product search DB is used when the system control unit 13 searches a product sold in the shopping site based on a user-designated search condition.

The system control unit 13 is configured of a CPU (Central Processing Unit) 13a, a ROM (Read Only Memory) 13b, a RAM (Random Access Memory) 13c and the like. The CPU 13a reads and executes various programs stored in the ROM 13b or the storage unit 12 to realize various functions. The system control unit 13 is an exemplary "different product extraction means", an exemplary "provision means" and an exemplary "cancelled product extraction mean."

The shopping server 1 may be configured with multiple servers such as a server for managing various databases, a search processing server for performing a product search processing and a WWW server for providing various items of information, for example.

### [3. Structure of user terminal 2]

Though not shown, the user terminal 2 comprises a system control unit having the CPU, the RAM, the ROM and the like, a storage unit configured of a recording medium such as hard disc drive, a communication unit for making communication with the shopping server 1 or the like, an operation unit operated by the user, and a display unit for displaying the Web pages provided from the shopping server 1 thereon.

### [4. Operations during product purchase in shopping system S]

The operations during product purchase in the shopping system S according to one embodiment of the present invention will be described below.

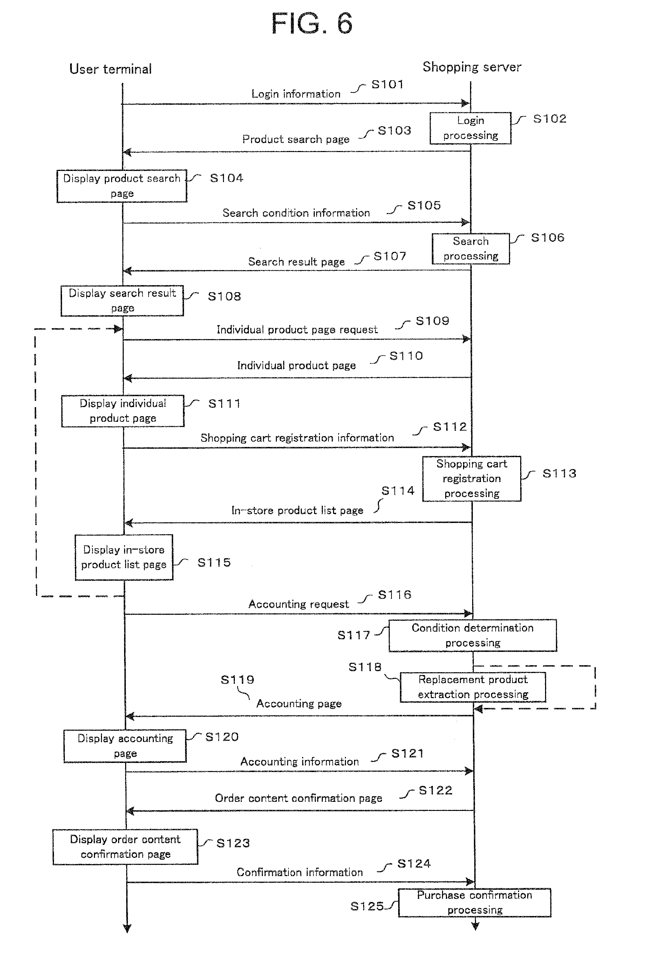

The operations of the shopping system S will be described with reference to the sequence diagram shown in Fig. 6. For a simplified explanation, there will be described a case in which only one user terminal 2 accesses the shopping site. Before the processings shown in the sequence diagram start, the user terminal 2 accesses the shopping site and displays the top page (not shown) of the shopping site on the display unit.

At first, when detecting an operation of transmitting a member ID and an authentication password to the shopping server 1, the system control unit in the user terminal 2 transmits login information including the input member ID and authentication password to the shopping server 1 (step S101).

When receiving the login information, the system control unit 13 in the shopping server 1 performs a login processing (step S102). Specifically, the system control unit 13 compares the member ID and the authentication password included in the received login information with the member ID and the authentication password registered in the member DB 121. When it is determined that the login processing is not problematic, the system control unit 13 transmits a product search page into which the user can input a search condition for searching a product to the user terminal 2 (step S103).

When receiving the product search page, the system control unit in the user terminal 2 displays it on the display unit (step S104). The product search page can be input with the search condition such as a search keyword for searching a product. When determining that the search condition for searching a product is received and the search condition has been completely input in the product search page, the system control unit in the user terminal 2 transmits search condition information indicating the input search condition to the shopping server 1 (step S105).

When receiving the search condition information, the system control unit 13 in the shopping server 1 performs a search processing of searching a product meeting the search condition (step S106). The search processing is performed by a well-known search technique using the product search DB.

Then, the system control unit 13 in the shopping server 1 transmits a search result page for displaying the search result to the user terminal 2 (step S107). To the contrary, the system control unit in the user terminal 2 displays the received search result page on the display unit (step S108). The search result page displays a list of products searched based on the search condition therein. Specifically, the product information such as representative product image, product name, manufacturer name, product explanation, product price and store name is displayed per searched product. The product information is hyperlinked, and thus when clicked, transits to an individual product page (not shown) for displaying detailed information on the product therein.

While the search result page is being displayed, when determining that the individual product page display operation (the operation of clicking the aforementioned hyperlink) has been performed by the user, the system control unit in the user terminal 2 transmits an individual product page request including the operated product information for identifying the product to be operated to the shopping server 1 (step S109).

When receiving the individual product page request, the system control unit 13 in the shopping server 1 transmits the individual product page corresponding to the user-clicked product to the user terminal 2 based on the operated product information included in the individual product page request (step S110). To the contrary, when receiving the individual product page, the system control unit in the user terminal 2 displays it on the display unit (step S111). The individual product page displays a product image, product's detailed information and store's detailed information (payment method, shipping method and the like) therein. The individual product page is provided with a purchase quantity input unit for inputting the purchase quantity and a shopping cart button. When the individual product page is being displayed, the user inputs the purchase quantity (order quantity) in the purchase quantity input unit and clicks the shopping cart button thereby to register a product displayed on the individual product page in the shopping cart.

While the individual product page is being displayed, when determining that the operation of clicking the shopping cart button has been performed by the user, the system control unit in the user terminal 2 transmits shopping cart registration information including the product ID of the product registered in the shopping cart (the product displayed in the individual product page), the store ID of the store selling the product, and the purchase quantity information indicating the purchase quantity to the shopping server 1 (step S112).

When receiving the shopping cart registration information, the system control unit 13 in the shopping server 1 performs a shopping cart registration processing (step S113). Specifically, the system control unit 13 stores the product ID, the store ID and the purchase quantity information included in the received shopping cart registration information as shopping cart information in association with the member ID of the logged-in user in the storage unit 12. Then, the system control unit 13 transmits a in-store product list page displaying a list of products sold in the store corresponding to the store ID included in the received shopping cart registration information therein to the user terminal 2 (step S114).

When receiving the in-store product list page, the system control unit in the user terminal 2 displays it on the display unit (step S115). The in-store product list page displays the product information such as representative product image, product name and product price per product therein. The product information is hyperlinked, and thus when clicked, transits to the individual product page (not shown) displaying detailed information on the product therein. The in-store product list page is provided with an accounting button to be pressed when the products registered in the shopping cart are paid.

While the in-store product list page is being displayed, when determining that the individual product page display operation (the operation of clicking the aforementioned hyperlink in the in-store product list page) has been performed by the user, the system control unit in the user terminal 2 transmits an individual product page request including the operated product information for identifying a target product to the shopping server 1 (step S109). In the shopping system S, when the individual product page display operation is performed while the in-store product list page is being displayed, the same processings as the processings in step S109 to step S115 are repeated.

While the in-store product list page is being displayed, when determining that the accounting button has been pressed, the system control unit in the user terminal 2 transmits an accounting request to the shopping server 1 (step S116).

When receiving the accounting request, the system control unit 13 in the shopping server 1 performs a condition determination processing (step S117). Specifically, the system control unit 13 determines whether each presentation condition registered in the benefit DB 126 is met based on situation information indicating a user's product purchase situation, and when a benefit meeting the presentation condition is present, determines whether the application condition for the benefit is met. That is, the system control unit 13 extracts a benefit which meets the presentation condition but does not meet the application condition. The situation information indicating a user's product purchase situation includes the shopping cart information (see step S113) indicating the products registered in the shopping cart, and the purchase history information registered in the purchase history DB 125.

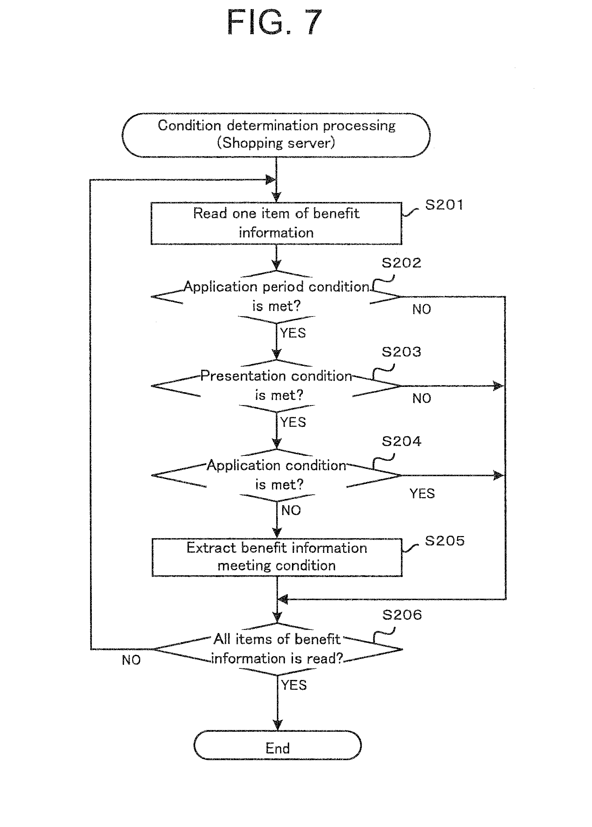

A flow of the condition determination processing will be described herein with reference to the flowchart in Fig. 7. At first, the system control unit 13 reads one item of benefit information registered in the benefit DB 126 (step S201). The system control unit 13 determines whether the application period condition (step S202), the presentation condition (step S203) and the application condition (step S203) are met, respectively. At this time, when determining that the application period condition and the presentation condition are met but the presentation condition is not met, the system control unit 13 extracts the benefit information (step S205) and proceeds to step S206. On the other hand, in other cases, the processing proceeds to step S206. Subsequently, the system control unit 13 repeats the processings in step S201 to step S205 until completely reading all the benefit information registered in the benefit DB 126 (step S206).

There will be described below the determinations of the presentation condition and the application condition when it is determined that the application period condition is met for the three benefits with the benefits ID "CMP001" to "CMP003" shown in Fig. 4 (step S202: YES).

When determining that the application period condition is met for the benefit with the benefit ID "CMP001", the system control unit 13 then determines the presentation condition. If it is determined that the presentation condition that the total purchase amount of the products registered in the shopping cart is over 3000 yen is met, then a determination is made as to whether the application condition that the total purchase amount of the products registered in the shopping cart is over 5000 yen is met. When it is determined that the application condition is not met, the application condition for the benefit, the benefit contents, and the product to be purchased instead of the products registered in the shopping cart for meeting the application condition are presented to the user.

The system control unit 13 determines the presentation condition that a bulb-type fluorescent light is registered in the shopping cart for the benefit with the benefit ID "CMP002." If it is determined that the presentation condition is met, then a determination is made as to the application condition that a LED bulb is registered in the shopping cart. When it is determined that the application condition is not met, the application condition for the benefit, the benefit contents, the product (LED bulb) to be purchased instead of the product (bulb-type fluorescent light) registered in the shopping cart for meeting the application condition are presented to the user.

On the other hand, when determining the presentation condition and the application condition for the benefit with the benefit ID "CMP003", the system control unit 13 first acquires the purchase history information from the purchase history DB 125 based on the member ID of the logged-in user. At this time, the purchase history information on the purchase time/date within the application period is acquired. A determination is made as to whether the presentation condition and the application condition are met as described in Fig. 5 based on the shopping cart information and the acquired purchase history information. When it is determined that the presentation condition is met but the application condition is not met, the application condition for the benefit, the benefit contents, the product to be purchased instead of the product registered in the shopping cart for meeting the application condition are presented to the user. When it is determined that the presentation condition is not met or the application condition is met for each benefit, neither is presented to the user.

Turning to Fig. 6, when terminating the condition determination processing, the system control unit 13 in the shopping server 1 then performs a replacement product extraction processing (step S118). The replacement product extraction processing is performed only when the benefit which meets the presentation condition but does not meet the application condition is extracted in the condition determination processing.

In the replacement product extraction processing, the system control unit 13 extracts a product to be purchased for meeting the application condition instead of the product registered in the shopping cart. Specifically, the fungible product DB 127 is searched based on the store ID for identifying the store (the store where the user orders the products) selling the products registered in the shopping cart and the product ID for identifying each product registered in the shopping cart. That is, a product in the same genre, which is sold in the same store, is extracted for each product registered in the shopping cart. Then, the system control unit 13 purchases a product for the replacement target product thereby to determine whether the application condition is met for each extracted product. A product which is registered in the shopping cart and is to be replaced for meeting the application condition is called "replacement target product" and a product to be purchased instead of the "replacement target product" for meeting the application condition is called "replacement product."

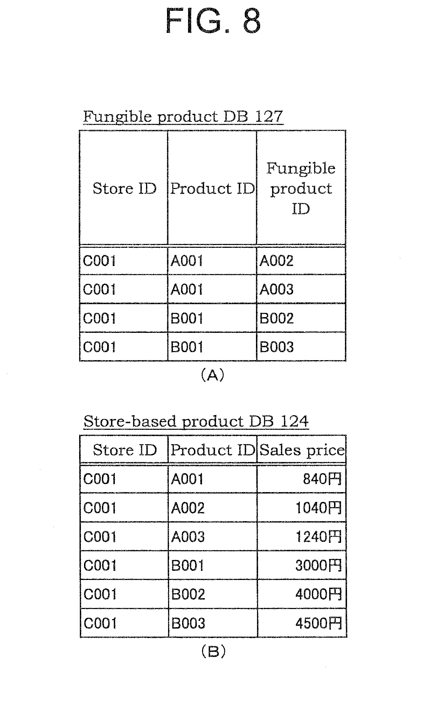

The replacement product extraction processing will be specifically described with reference to Fig. 8. Fig. 8(A) is a diagram showing part of exemplary information registered in the fungible product DB 127. Fig. 8(B) is a diagram showing part of exemplary information registered in the store-based product DB 124. There will be described herein a case in which when a product A1 (product ID:A001) whose sales price is 840 yen and a product B1 (product ID: B001) whose sales price is 3000 yen are registered in the shopping cart (both the products are assumed to be sold in the same store C (store ID: C001)), a replacement product is to be extracted for meeting the application condition for the benefit identified with the benefit ID "CMP001."

At first, the system control unit 13 searches the fungible product DB 127 based on the store ID (store ID: C001) of the store C and the product ID (product ID: A001) of the product A1. The fungible product IDs "A002" and "A003" are searched. Then, the store-based product DB 124 is searched based on the searched product IDs "A002" and "A003". The sales price "1040 yen" of the product with the product ID "A002" and the sales price "1240 yen" of the product with the product ID "A003" are acquired, respectively. Even if the product with the product ID "A002" is purchased instead of the product A1, the total purchase amount "4040 yen" does not exceed 5000 yen. Even when the product with the product ID "A003" is purchased instead of the product A1, the total purchase amount "4240 yen" does not exceed 5000 yen. Thus, the system control unit 13 does not extract the fungible product of the product A1 as a replacement product.

Then, the system control unit 13 searches the fungible product DB 127 based on the store ID (store ID: C001) of the store C and the product ID (product ID: B001) of the product B1. The fungible product IDs "B002" and "B003" are searched. Then, the store-based product DB 124 is searched based on the searched product IDs "B002" and "B003". The sales price "4000 yen" of the product with the product ID "B002" and the sales price "4500 yen" of the product with the product ID "B003" are acquired, respectively. Even when the product with the product ID "B002" is purchased instead of the product B1, the total purchase amount "4840 yen" does not exceed 5000 yen. On the other hand, when the product with the product ID "B003" is purchased instead of the product B1, the total purchase amount "5340 yen" exceeds 5000 yen. Thus, the system control unit 13 extracts the product with the product ID "B003" which is a fungible product of the product B1 as a replacement product.

When each fungible product searched from the fungible product DB 127 is exchanged with a replacement target product and consequently no product meets the application condition, the system control unit 13 searches a product meeting the application condition, not from the fungible product DB 127. For example, a LED bulb as a fungible product of a bulb-type fluorescent light is not registered in the fungible product DB 127 for the benefit identified with the benefit ID "CMP002", the system control unit 13 extracts a LED bulb as a replacement product based on the application condition. In this case, it is preferable that a LED bulb is previously registered as a fungible product of a bulb-type fluorescent light in the fungible product DB 127.

For the benefit identified with the benefit ID "CMP003", there is additionally set such that the product A or the product B meeting the application condition is extracted as a replacement product, not such that a replacement product is extracted based on the fungible product DB 127. For example, there is set such that in Cases 1, 3, 6 and 27 in Fig. 5, the product B is extracted as a replacement product, and in Cases 13 to 15 and 29, the product A is extracted as a replacement product.

Then, the system control unit 13 in the shopping server 1 transmits an accounting page to the user terminal 2 (step S119). When extracting the benefit which meets the presentation condition but does not meet the application condition in the condition determination processing (step S117), the system control unit 13 generates an accounting page in which the application condition of the benefit, the benefit contents and the product to be purchased instead of the product registered in the shopping cart are displayed in a partial region, and transmits it to the user terminal 2.

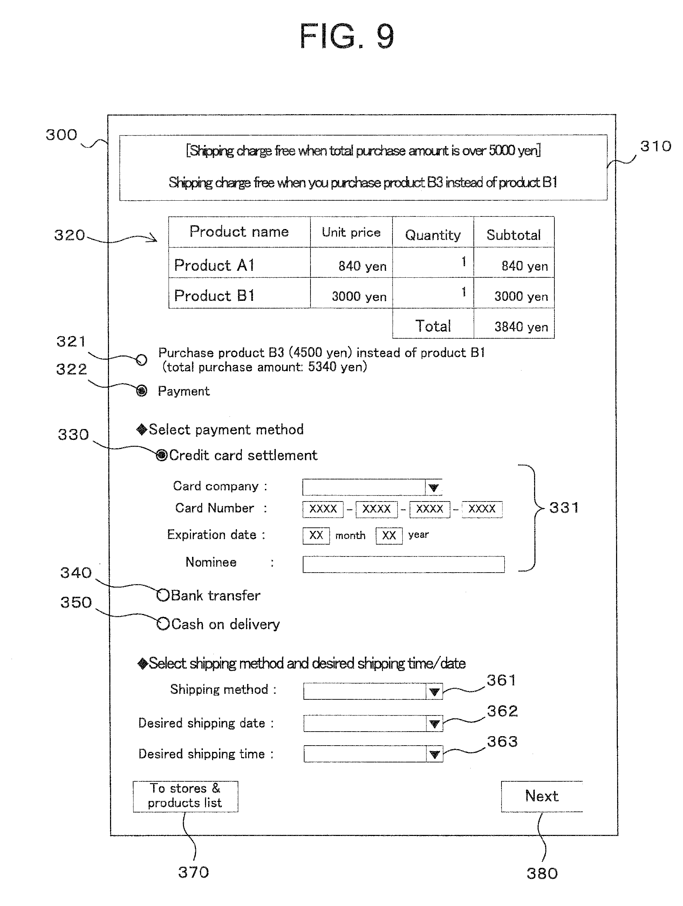

When receiving the accounting page, the system control unit in the user terminal 2 displays it on the display unit (step S120). Fig. 9 shows an exemplary display of the accounting page when the presentation condition corresponding to the benefit identified with the benefit ID "CMP001" is met but the application condition is not met.

As shown in Fig. 9, the accounting page 300 is provided with a presentation information display area 310. The presentation information display area 310 displays therein the application condition and the benefit contents of the benefit identified with the benefit ID "CMP001." The presentation information display area 310 displays therein the product to be purchased instead of the product registered in the shopping cart as the information for meeting the application condition. In the example of Fig. 9, there is displayed information indicating that the application condition is met when the product B3 is purchased instead of the product B1. When the presentation condition of the benefit identified with the benefit ID "CMP002" is met but the application condition is not met, the presentation information display area 310 displays therein "5 times points for LED bulb. 5 times points for LED bulb instead of bulb-type fluorescent light", for example. When the product A and the product C are registered in the shopping cart, the presentation condition of the benefit identified with the benefit ID "CMP003" is met but the application condition is not met, the presentation information display area 310 displays therein "We give you portable game player by lot if you purchase both product A and product C. We give you portable game player by lot if you purchase product B instead of product C", for example. When it is determined that the presentation condition is met but the application condition is not met for multiple types of benefits, the information may be displayed for all the benefits and the information may be displayed for some benefits. When determining that the presentation condition is met but the application condition is not met in the condition determination processing (step S117), the system control unit 13 in the shopping server 1 does not provide the presentation information display area 310 in the accounting page 300.

The accounting page 300 is provided with an accounting information display area 320. The accounting information display area 320 displays therein the name of each product registered in the shopping cart, the unit price (sales price), the purchase (order) quantity and subtotal, and the total purchase amount of the products registered in the shopping cart. There are provided a replacement radio button 321 to be selected when a replacement product (the product B3 in the example of Fig. 9) is purchased instead of the replacement target product (the product B1 in the example of Fig. 9) and a non-replacement radio button 322 to be selected when a replacement product is not purchased instead of the replacement target product at the bottom of the accounting information display area 320. The non-replacement radio button 322 is selected in the initial state, and when the user selects the replacement radio button 321, the replacement products are displayed instead of the replacement target products in the accounting information display area 320.

The accounting page 300 is provided with various radio buttons 330, 340, 350 for causing the user to select a payment method, a shipping method selection unit 361 for selecting a shipping method, a desired shipping date selection unit 362 for selecting a desired shipping date, and a desired shipping time selection unit 363 for selecting a desired shipping time. The radio buttons such as the credit card settlement radio button 330, the bank transfer radio button 340 and the cash-on-delivery radio button 350 are provided. There is provided a credit card information input unit 331 for inputting credit card information (card company, card number, expiration date and nominee) when the credit card settlement radio button 330 is selected.

The accounting page 300 is further provided with a "to stores&products list" button 370 and a "next" button 380. When determining that the user has clicked the "to stores&products list" button 370, the system control unit in the user terminal 2 transmits a stores&products list page request to the shopping server 1, and then receives and displays the stores&products list page on the display unit. Thereby, the user can register the products sold in the same store in the shopping cart. When determining that the user has clicked the "next" button 380, the system control unit in the user terminal 2 transmits, to the shopping server 1, the accounting information including the user-input information in the accounting page 300 (replacement information indicating which of the replacement radio button 321 or the non-replacement radio button 322 has been selected, information indicating a payment method, information indicating a shipping method, information indicating a desired shipping date, information indicating a desired shipping time, and credit card information when the payment method is credit card settlement) (step S121).

When receiving the accounting information, the system control unit 13 in the shopping server 1 stores the accounting information in the storage unit 12 and refers to the replacement information included in the accounting information, and when determining that the user has selected the replacement radio button 321, updates the shopping cart for purchasing a replacement product instead of the replacement target product. Then, the system control unit 13 transmits an order content confirmation page for causing the user to confirm the order contents to the user terminal 2 (step S122). When receiving the order content confirmation page, the system control unit in the user terminal 2 displays it on the display unit (step S123). The user-ordered contents (purchase product, purchase quantity, payment method, shipping method, desired shipping date, desired shipping time and the like) can be confirmed on the order content confirmation screen. When the user has selected the replacement radio button 321, the replacement product is displayed as a purchase product instead of the replacement target product. The order content confirmation page is provided with a confirmation button, and the user clicks the confirmation button when the order contents are not wrong. When determining that the confirmation button has been clicked, the system control unit in the user terminal 2 transmits confirmation information indicating that the user-ordered contents have been confirmed to the shopping server 1 (step S124).

When receiving the confirmation information, the system control unit 13 in the shopping server 1 performs a purchase confirmation processing (step S125). Specifically, the purchase history information is created and is registered in the purchase history DB 125 based on the shopping cart information, the information included in the accounting information stored in the storage unit 12 during the reception of the accounting information, the store ID of the selling store, the member ID of the user having purchased the product, a current time/date (current time/date acquisition method is arbitrary) and the like.

As described above, in the shopping server 1 according to the present embodiment, the benefit DB 126 holds the application condition of the benefit given to the user on the shopping site (exemplary "benefit application condition") per benefit, and when the application condition is not met, the system control unit 13 extracts a replacement product meeting the application condition which is met by the replacement product (exemplary "different product") in addition to the product registered in the shopping cart (exemplary "user-desired product"), and provides the accounting page (exemplary "presentation information") for presenting the extracted replacement product and the application condition to the user to the user terminal 2.

In the shopping server 1 according to the present embodiment, when the benefit application condition is met by purchasing the replacement product in addition to the product registered in the shopping cart, the fact is presented to the user. Thus, since the application condition of the benefit, which is applied if the user purchases a replacement product, can be grasped by the user, the user is less likely to miss the benefit, thereby enhancing the user's satisfaction when the benefit is applied. Since the user is expected to purchase a product for meeting the application condition, the sales of the store selling the products can be increased.

In the shopping server 1 according to the present embodiment, even when at least some replacement target products (exemplary "cancelled product") is cancelled from the products registered in the shopping cart, if a replacement product is purchased instead, the system control unit 13 extracts the replacement target product meeting the application condition and provides the accounting page (exemplary "presentation information") for presenting the extracted replacement target product to the user, to the user terminal 2. Thereby, the user can grasp the products meeting the application condition even when the purchase thereof is cancelled.

In the shopping server 1 according to the present embodiment, the system control unit 13 extracts a fungible product with the replacement target product as a replacement product. Thereby, since the replacement product to be purchased instead of the replacement target product for user's enjoying the benefit is a fungible product with the replacement target product, the user can enjoy the benefit without resistance.

In the shopping server 1 according to the present embodiment, a fungible product is in the same genre as the replacement target product. Thereby, since the replacement product to be purchased instead of the replacement target product for user's enjoying the benefit is in the same genre as the replacement target product, the user can enjoy the benefit without resistance.

In the shopping server 1 according to the present embodiment, a user-purchasable product is sold at any store in multiple stores, and a fungible product is sold in the same store as the store selling the replacement target product. The replacement product to be purchased instead of the replacement target product for user's enjoying the benefit is sold at the same store as the store selling the replacement target product and thus the user can enjoy the benefit without resistance.

In the shopping server 1 according to the present embodiment, the benefit DB 126 holds the presentation condition (exemplary "process condition", for example, the presentation condition for the benefit identified with the benefit ID "CMP001" or "CMP003"), which is met in the process before the benefit application condition is met, per benefit, and the system control unit 13 extracts a replacement product when the application condition is not met but the application condition is met. When the purchase is being made in the middle stage where the benefit application condition is met, the benefit application condition is presented to the user. Thus, since the user can grasp the application condition for the benefit which is applied by purchasing a different product from the user-desired product, the user is less likely to miss the benefit, thereby enhancing the user's satisfaction when the benefit is applied.

In the shopping server 1 according to the present embodiment, the fungible product DB 127 stores therein the user-purchasable products and the replaceable products with the product in a corresponded manner, and the system control unit 13 extracts a replacement product with reference to the fungible product DB 127. Thereby, a replacement product to be purchased for meeting the benefit application condition can be easily extracted.

In the shopping server 1 according to the present embodiment, the system control unit 13 further provides, to the user terminal 2, the accounting page 300 (exemplary "display data for displaying a product designation screen on which the user can designates a different product as a his/her desired product") having the replacement radio button 321 capable of registering the replacement product in the shopping cart. Thereby, the user can easily register the replacement product capable of meeting the application condition in response to the registration in the shopping cart from the accounting page 300 into the shopping cart. Further, when selecting the replacement radio button 321, the user can cancel the replacement target product and register the replacement product in the shopping cart, which is highly convenient.

The user-browsed product history and the user-designated favorite products are stored in the storage unit 12 or the like per user, and these items of information and the information registered in the purchase history DB 125 may be used for extracting a replacement product. For example, in the replacement product extraction processing (step S118), when multiple products meeting the condition for a replacement product are present, the system control unit 13 may present, to the user, the products which the user has purchased, the products which the user has browsed and the products which the user has designated in Favorite, as the replacement products. The user-designated favorite stores are stored in the storage unit 12 or the like per user, and when the application condition does not include purchasing at the same store, the system control unit 13 may present the products sold in the user's favorite stores as the replacement products to the user.

The products registered in the shopping cart (exemplary "group of user-desired products") by the user, and the history information of the products cancelled from the shopping cart are stored in the storage unit 12 or the like (exemplary "selection history holding means") per user and may be used for extracting a replacement product. Specifically, when a user registered a product P and a product Q included in the same genre or related genres into the shopping cart and then deleted the product Q and finally purchased only the product P, the system control unit 13 (exemplary "replaceable relationship determination means") determines that the product P and the product Q are in a replaceable relationship. This is based on the possibility that the user registered the product P and the product Q in the shopping cart and then deleted the product Q after thinking about which product to purchase. The related genres are in a replaceable relationship, not the same genre, such as DVD (Digital Versatile Disc) genre and Blu-ray Disc (registered trademark) genre. An inter-genre distance DB (not shown) predefining an inter-genre distance (by which a replaceability between genres is indicated, and as the replaceability is higher, the inter-genre distance is shorter) or a genre DB (not shown) predefining related genres per genre (for example, B genre is predefined for A genre) is constructed in the storage unit 12 or the like, for example, such that the system control unit 13 can determine whether products are included in the same genre or related genres. When the inter-genre distance DB is provided, if the inter-genre distance between the products registered in the shopping cart is a certain distance or less, the system control unit 13 determines that the products are included in the same genre or related genres. On the other hand, when the genre DB is provided, when determining whether the products registered in the shopping cart are included in the related genres, the system control unit 13 specifies a related genre for one product and determines whether the other product is included in the related genre. If the user registered the product P, the product Q and a product R included in the same genre or related genres into the shopping cart and then deleted the product Q and the product R and purchased only the product P, it can be determined that the product P, the product Q and the product R are in a replaceable relationship. When multiple products meeting the condition as a replacement product are present in the replacement product extraction processing (step S118) and when some products in the replaceable relationship are the replacement target products, the system control unit 13 determines the products in the replaceable relationship with the products as the replacement products. When the history information is referred to, not only the user's history information by which the application condition is to be presented but also other user's history information can be referred to. This is based on that the products in the replaceable relationship for one user are the products in the replaceable relationship also for other users.

When the user registers his/her favorite products (favorite products) in the favorite product list (exemplary "group of favorite products") managed in the shopping system S, the products and the registration time/date are stored in the storage unit 12 or the like (exemplary "favorite information holding means") per user and may be used for extracting a replacement product. Specifically, the system control unit 13 (exemplary "replaceable relationship determination means) determines that multiple products included in the same genre or related genres registered in the favorite product list within a predetermined period (three hours, for example) by one user are in the mutually replaceable relationship. This is based on the possibility that the user registered products in the favorite product list and then compared them for determining which product to purchase. The condition of "within a predetermined period" is made since it is considered that the products registered three years ago and the products registered two weeks ago are not in the replaceable relationship. For example, the inter-genre distance DB and the genre DB are constructed in the storage unit 12 or the like and the system control unit 13 refers to them as described above so that a determination is made as to whether the products are in the same genre or related genres. When multiple products meeting the condition as a replacement product are present in the replacement product extraction processing (step S118) and when a product in the replaceable relationship is the replacement target product, the system control unit 13 determines the products in the replaceable relationship with the product as the replacement products. When the registration information into the favorite product list is referred to, not only the user's registration information by which the application condition and the like are to be presented but also other user's registration information can be referred to. This is based on that the products in the replaceable relationship for one user are the products in the replaceable relationship also for other users.

When a user purchased a product X more than predetermined times and then purchased a product Y instead of the product X (changed from the product X to the product Y), the product X and the product Y are assumed to be in a replaceable relationship. When the product (the product X, herein) for which a product in the replaceable relationship is to be searched is present, the system control unit 13 (exemplary "replaceable relationship determination means") extracts the user who purchased the product X more than predetermined times with reference to the purchase history 125 (exemplary "favorite information holding means"), and determines whether the extracted user has not purchased the product X within a predetermined time (a period from now up until three month ago, for example). When determining that the extracted user has not purchased the product X in the predetermined period, the system control unit 13 determines whether the user has purchased other product in the same genre as the product X in the predetermined period (when a product in the same genre as the product X is searched, the genre DB (not shown) predefining the genre in which the product is included is referred to per product). At this time, the condition is made such that a product in the same genre as the product X is to be purchased more than predetermined times for the predetermined period. The condition is made for excluding a case in which a product in the same genre is occasionally purchased since a desired product is sold out. The range of the "predetermined period" may be set at an average period at which the user purchased the product X in the past or a slightly longer period than it, for example. When determining that the extracted user has purchased a product in the same genre as the product X in the predetermined period, the system control unit 13 determines that the product (the product Y, herein) is in the replaceable relationship with the product X. At this time, the system control unit 13 may determine whether the extracted user purchased the product Y in the same genre as the product X and then purchased the product X, and may determine that the product X and the product Y are in the replaceable relationship only when the product X is not purchased. This is because when the user changed from the product X to the product Y, a case in which he/she then returned to the product A and a case in which he/she did not return to the product A are assumed but the replaceable relationship between the product X and the product Y is stronger in the latter case. When multiple products meeting the condition as a replacement product are present in the replacement product extraction processing (step S118) and when a product (the product X, for example) in the replaceable relationship is a replacement target product, the system control unit 13 determines a product (the product Y, for example) in the replaceable relationship with the product as a replacement product.

### [5. Second embodiment]

A second embodiment will be described below. In the first embodiment, when the benefit application condition can be met by purchasing a different product as a replacement product instead of some replacement target products in the products registered in the shopping cart, the fact is presented to the user, while in the second embodiment, when the benefit application condition can be met by additionally purchasing a different product in addition to the products registered in the shopping cart, the fact is presented to the user. The product to be additionally purchased is called additional product.

The second embodiment will be described below, wherein different parts from those in the first embodiment will be mainly described and the same members and processings as those in the first embodiment are denoted with the same reference numerals as those in the first embodiment and an explanation thereof will be omitted.

A benefit in the second embodiment will be described first. For example, it is assumed that if the application condition that both the product A and the product B are purchased within the application period (August 1, 2010 to September 30, 2010) is met, a benefit of giving a cell phone strap is registered in the benefit DB 126. The determinations of the presentation condition and the application condition for the benefit are the same as those for the benefit identified with the benefit ID "CMP003" described in Fig. 5 and thus an explanation thereof will be omitted. When the presentation condition is met but the application condition is not met, the application condition, the benefit contents and the product to be additionally purchased for meeting the application condition are presented to the user.

In the second embodiment, when the benefit is set, the system control unit 13 in the shopping server 1 extracts a benefit meeting the presentation condition and the application condition based on the situation information (the shopping cart information and the purchase history information) indicating the user's product purchase situation in the condition determination processing (step S117 in Fig. 6).

When the benefit which meets the presentation condition but does not meet the application condition is extracted, the system control unit 13 then performs an additional product extraction processing. The additional product extraction processing is specific to the second embodiment which is performed instead of the replacement product extraction processing (step S118 in Fig. 6) according to the first embodiment. The system control unit 13 extracts a product (additional product) to be additionally purchased by the user for meeting the application condition "both the product A and the product B are purchased within the application period" in the additional product extraction processing. For example, (i) when the product B was not purchased within the application period and the product A was registered in the shopping cart and (ii) when the product A was purchased within the application period and the product B was not registered in the shopping cart, the product B is extracted as an additional product.

Then, the system control unit 13 in the shopping server 1 transmits the accounting page to the user terminal 2 (step S119). When the benefit which meets the presentation condition but does not meet the application condition is extracted in the condition determination processing (step S117), the system control unit 13 generates the accounting page displaying the benefit application condition, the benefit contents, the product to be purchased in addition to the products registered in the shopping cart in a partial region therein, and transmits it to the user terminal 2.

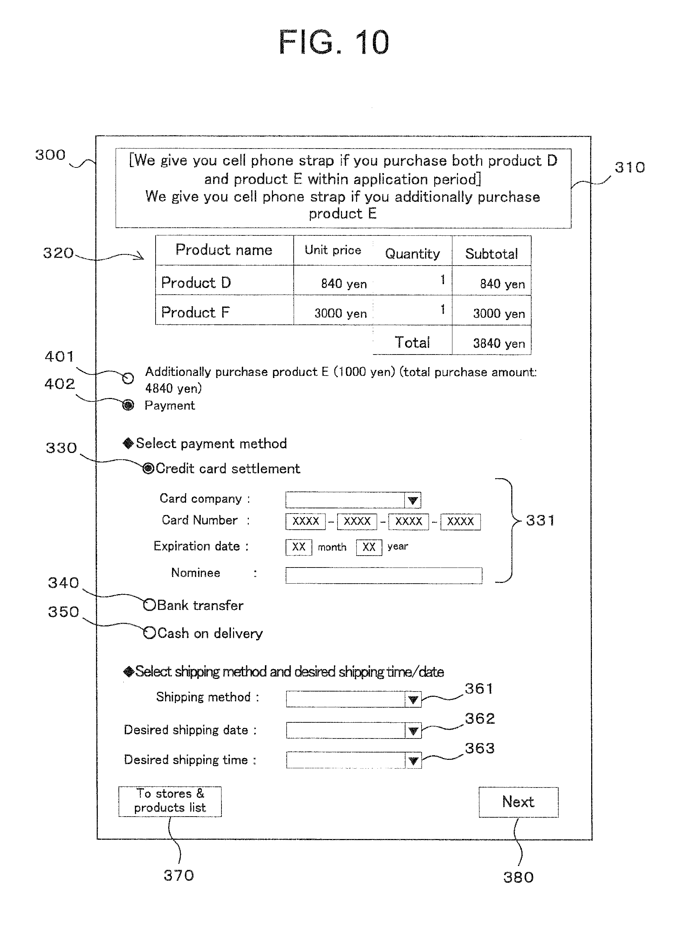

When receiving the accounting page, the system control unit in the user terminal 2 displays it on the display unit (step S120). Fig. 10 shows an exemplary display of the accounting page when it is determined that the presentation condition corresponding to the benefit is met but the application condition is not met in the second embodiment.

The accounting page 300 according to the second embodiment shown in Fig. 10 is different from the accounting page 300 (see Fig. 9) according to the first embodiment described in Fig. 10 in that the contents displayed in the presentation information display area 310 are different and an add radio button 401 and a non-add radio button 402 are provided instead of the replacement radio button 321 and the non-replacement radio button 322. The add radio button 401 is selected for additionally purchasing an additional product (a product E in the example of Fig. 10) in addition to the products registered in the shopping cart. On the other hand, the non-add radio button 402 is selected for not additionally purchasing an additional product. The non-add radio button 402 is selected in the initial state, and when the user selects the add radio button 401, the accounting information display area 320 displays therein the name of the additional product, the unit price (sales price), the purchase (order) quantity and the subtotal in addition to the products being displayed.

When determining that the user has clicked the "next" button 380 while the accounting page 300 is being displayed, the system control unit in the user terminal 2 transmits, to the shopping server 1, the accounting information including the user-input information in the accounting page 300 (addition information indicating which of the add radio button 401 or the non-add radio button 402 has been selected, information indicating a payment method, information indicating a shipping method, information indicating a desired shipping date, information indicating a desired shipping time, and credit card information when the payment method is credit card settlement) (step S121).

When receiving the accounting information, the system control unit 13 in the shopping server 1 stores the accounting information in the storage unit 12, and when determining that the user has selected the add radio button 401, updates the shopping cart with the additionally purchased additional product with reference to the addition information included in the accounting information. The system control unit 13 transmits the order content confirmation page to the user terminal 2 (step S122), and the system control unit in the user terminal 2 displays the received order content confirmation page on the display unit (step S123). The user can confirm the ordered contents on the order content confirmation screen, and when the user selects the add radio button 401, the additional product is also displayed as a purchased product thereon.

As described above, in the shopping server 1 according to the second embodiment, the benefit DB 126 holds the application condition (exemplary "benefit application condition") for the benefit given to the user on the shopping site per benefit, and the system control unit 13 extracts an additional product meeting the application condition by purchasing the additional product (exemplary "different product") together with the products (exemplary "user-desired products") registered in the shopping cart and provides the accounting page (exemplary "presentation information") for presenting the extracted additional product and the application condition to the user to the user terminal 2.

In the shopping server 1 according to the second embodiment, when the benefit application condition is met by adding an additional product to the products registered in the shopping cart, the fact is presented to the user. Since the user can grasp the application condition for the benefit applied by purchasing an additional product, the user is less likely to miss the benefit, thereby enhancing the user's satisfactory when the benefit is applied. It is assumed that the user would purchase the product for meeting the benefit application condition, which can enhance the sales of the store selling the product.

In each embodiment, there has been described that the products registered in the shopping cart are exemplary "user's favorite products", but the products registered in the favorite product list by the user may be exemplary "user-desired products." For example, the presentation condition and the application condition are determined for the product registered in the favorite product list such that a user-desired product can be added from the product list to the favorite product list. At this time, the products registered in the favorite product list are determined as purchase products as the products registered in the shopping cart are determined as purchase products. When the benefit which meets the presentation condition but does not meet the application condition is extracted, a product (exemplary "different product") meeting the application condition, which is met by purchasing the product instead of a product registered in the favorite product list (or instead of some products registered in the favorite product list), is extracted and is presented to the user together with the application condition.

### EXPLANATION OF REFERENCE NUMERALS

1 SHOPPING SERVER
11 COMMUNICATION UNIT
12 STORAGE UNIT
13 SYSTEM CONTROL UNIT
121 MEMBER DATABESE
122 STORE DATABESE
123 PRODUCT DATABESE
124 STORE-BASED PRODUCT DATABESE
125 PURCHASE HISTORY DATABESE
126 BENEFIT DATABESE
127 FUNGIBLE PRODUCT DB
2 USER TERMINAL
NW NETWORK
S SHOPPING SYSTEM

## Claims

1. A product purchase support apparatus for supporting a user to purchase a product from a store by use of a terminal device, the product purchase support apparatus comprising:
a benefit information holding means that holds a benefit which is given when the product is purchased and a benefit application condition necessary for applying the benefit as benefit information per benefit;
a different product extraction means that extracts a different product meeting the benefit application condition when the user purchases the different product from and in addition to desired products in case that the benefit application condition is not met; and
a provision means that provides, to the terminal, presentation information for presenting the different product and the benefit application condition to the user.

2. The product purchase support apparatus according to claim 1, further comprising:
a cancelled product extraction means that extracts a cancelled product which meets the benefit application condition even when the user cancels at least some products from desired products,
wherein the presentation information is directed for further presenting the cancelled product.

3. The product purchase support apparatus according to claim 2, wherein the different product extraction means extracts a fungible product with the extracted cancelled product as the different product.

4. The product purchase support apparatus according to claim 3, wherein the fungible product is in the same genre as the extracted cancelled product.

5. The product purchase support apparatus according to claim 3 or 4, wherein the user-purchasable product is sold at any store in multiple stores, and
the fungible product is sold at the same store as the store selling the extracted cancelled product.

6. The product purchase support apparatus according to any one of claims 1 to 5, wherein the benefit information holding means further holds a process condition which is met in a process until the benefit application condition is met per benefit, and
the different product extraction means extracts the different product in case that the benefit application condition is not met but the process condition is met.

7. The product purchase support apparatus according to any one of claims 3 to 6, further comprising:
a fungible product storage means that stores the user-purchasable product and a fungible product with the product in a corresponded manner,
wherein the different product extraction means extracts the different product with reference to the fungible product storage means.

8. The product purchase support apparatus according to claim 3, further comprising:
a selection history holding means that holds a history that a user includes a product in a group of desired products, and a history that the user cancelled a product from the group of desired products; and
a replaceable relationship determination means that when the selection history holding means holds a history that one product included in the same genre or related genres as the other product out of the group of desired products is cancelled with the other product left, determines that the products included in the group of desired products are in a replaceable relationship,
wherein the replaceable product is a product determined as in the replaceable relationship with the extracted cancelled product.

9. The product purchase support apparatus according to claim 3, further comprising:
a favorite information holding means that holds a product which the user includes in a group of favorite products, and a time/date when the product is included in the group of favorite products in a corresponded manner; and
a replaceable relationship determination means that determines that multiple products included in the same genre or related genres, which are included in the group of favorite products in a predetermined period, are in a mutually replaceable relationship in the favorite information holding means,
wherein the replaceable product is a product determined as in the replaceable relationship with the extracted cancelled product.

10. The product purchase support apparatus according to claim 3, further comprising:
a purchase history holding means that holds a product purchase history per user; and
a replaceable relationship determination means that extracts a user who has purchased one product more than predetermined times, and when the extracted user has not purchased the one product for a predetermined period and has purchased the other product in the same genre as the one product in the predetermined period, determines that the one product and the other product are in a replaceable relationship,
wherein the replaceable product is a product determined as in the replaceable relationship with the extracted cancelled product.

11. The product purchase support apparatus according to claim 10, wherein only when the extracted user purchased the other product and then did not purchased the one product, the replaceable relationship determination means determines that the one product and the other product are in a replaceable relationship.

12. The product purchase support apparatus according to any one of claims 1 to 11, wherein the provision means further provides, to the terminal, display data for displaying a product designation screen on which the user can designate the different product as a desired product.

13. A product purchase support method performed by a computer included in a product purchase support apparatus for supporting a user to purchase a product by use of a terminal, the method comprising:
a benefit information holding step of holding a benefit which is given when the product is purchased and a benefit application condition necessary for applying the benefit as benefit information per benefit;
a different product extraction step of extracting a different product meeting the benefit application condition when the user purchases the different product from and in addition to desired products in case that the benefit application condition is not met; and
a provision step of providing, to the terminal, presentation information for presenting the different product and the benefit application condition to the user.

14. A product purchase support program for causing a computer included in a product purchase support apparatus for supporting a user to purchase a product by use of a terminal to function as:
a benefit information holding means that holds a benefit which is given when the product is purchased and a benefit application condition necessary for applying the benefit as benefit information per benefit;
a different product extraction means that extracts a different product meeting the benefit application condition when the user purchases the different product from and in addition to desired products in case that the benefit application condition is not met; and
a provision means that provides, to the terminal, presentation information for presenting the different product and the benefit application condition to the user.

15. A computer-readable recording medium recording a product purchase support program therein, the program for causing a computer included in a product purchase support apparatus for supporting a user to purchase a product by use of a terminal to function as:
a benefit information holding means that holds a benefit which is given when the product is purchased and a benefit application condition necessary for applying the benefit as benefit information per benefit;
a different product extraction means that extracts a different product meeting the benefit application condition when the user purchases the different product from and in addition to desired products in case that the benefit application condition is not met; and
a provision means that provides, to the terminal, presentation information for presenting the different product and the benefit application condition to the user.
